# EUROPEAN PATENT SPECIFICATION

(11) **EP 0 203 771 B1**
(45) Date of publication and mention of the grant of the patent: **12.01.1994**
(21) Application number: 86303830.3
(22) Date of filing: 20.05.1986
(51) Int. Cl.: A21C 9/06, A21C 11/16

(54) **Method and die head for converting a co-extrusion apparatus**
Verfahren und Pressmundstück zum Umstellen einer Koextrusionsvorrichtung
Procédé et filière pour convertir un appareil de coextrusion

(30) Priority: 24.05.1985 US 738035
(43) Date of publication of application: 03.12.1986
(73) Proprietor: NABISCO, INC., Parsippany, NJ 07054-0311 (US)
(72) Inventor: Simelunas, William J., Deceased (US)
(74) Representative: Thomas, Roger Tamlyn

(56) References cited:
- EP-A- 0 130 748
- EP-A- 0 140 617
- US-A- 4 376 624

## Description

### Background of the Invention

This invention relates to a co-extrusion apparatus in which dissimilar inner and outer materials are simultaneously extruded from respective extruder outlets to form a rope-like co-extrudate.

European Patent Application EP-A-140,617 describes co-extrusion apparatus for forming a rope-like co-extrudate having a die block providing a plurality of extrusion dies, the inner and outer material being supplied from a respective hopper via a respective passageway extending around the outside cylindrical surface of a respective rotatable drum. The rotation of the drums transports the respective semi-solid material from the hoppers to the dies, in each of which the outer nozzle is provided by the die block and the inner nozzle is provided by an integral part of the apparatus extending into the outer nozzle. During operation of the co-extrusion apparatus, the rope-like co-extrudate is deposited upon a horizontally moving conveyor disposed below the mouth of the extrusion die.

European Patent Application EP-A-130,748 discloses a co-extrusion apparatus including a first hopper for containing a supply of a first material 34 and a second hopper for containing a supply of a second material 36, said co-extrusion apparatus further including first means 50, 52 for feeding said first material from said first hopper to a first outlet and second means 50, 54 for feeding said second material from said second hopper to a second outlet proximate to said first outlet, said apparatus comprising a co-extrusion die assembly 40 providing an inner nozzle 72 and an outer nozzle 74 surrounding said inner nozzle, the co-extrusion die assembly being detachably fastened to the co-extrusion apparatus so that said inner nozzle communicates with the first outlet and said outer nozzle communicates with the second outlet, said co-extrusion apparatus being operated to produce a rope-like co-extrudate having a core formed of the first material and a tube-like outer layer formed of the second material and surrounding said core.

The above-described co-extrusion apparatus may be used in the manufacture of cookies having an inner core formed of one substance and an outer envelope of another substance. For example, the inner substance might be a fruit filling or a dough having particulate matter such as nuts or chocolate chips, while the outer substance is another dough with or without particulate matter.

It has been found that the demand for a kind of cookie having an inner core of one material and an outer core of another, dissimilar material is not so great in some geographical areas as to require continuous manufacture of that cookie by co-extrusion apparatuses located in those areas. Moreover, it has been found that subsequently preparing the co-extrusion apparatus for the manufacture of another cookie having dissimilar inner and outer portions, in which at least one of the portions is different from the corresponding portion in the first cookie, results in considerable production inefficiencies owing to the time required to clean the co-extrusion apparatus for the new material.

### Summary of the Invention

According to one aspect, the present invention provides a method for using a co-extrusion apparatus including a first hopper for containing a supply of a first material and a second hopper for containing a supply of a second material, said co-extrusion apparatus further including first means for feeding said first material from said first hopper to a first outlet and second means for feeding said second material from said second hopper to a second outlet proximate to said first outlet, said method comprising the following steps:
detachably fastening a co-extrusion die providing an inner nozzle and an outer nozzle surrounding said inner nozzle, to the co-extrusion apparatus so that said inner nozzle communicates with the first outlet and said outer nozzle communicates with the second outlet;
operating said co-extrusion apparatus to produce a rope-like co-extrudate having a core formed of the first material and a tube-like outer layer formed of the second material and surrounding said core;
removing said co-extrusion die from said co-extrusion apparatus;
removably attaching a simple extrusion die with a single nozzle, to said co-extrusion apparatus so that said single nozzle communicates with one of said first and said second outlets and so that said simple extrusion die blocks the other of said first and said second outlets to prevent the passage of the respective material there through; and
operating said co-extrusion apparatus to produce a rope-like simple extrudate formed of a single material contained in the hopper associated with said one of said first and said second outlets.

The second material located within the second hopper is preferably a dough. Upon extrusion of the rope-like co-extrudate through the co-extrusion die, the co-extrudate may be deposited on a substantially horizontal conveyor and transported to a cutting station at which the co-extrudate is formed into a sequence of cookies having an outer portion formed by the dough and an inner portion of dissimilar material. In accordance with preferred features of the present invention, either the first material, the second material or both may take the form of a dough containing particulate matter such as chocolate chips or nut fragments.

In accordance with a preferred feature of the invention, the hopper and the feeding mechanism associated with the blocked outlet are cleaned at least in part during the operation of the co-extrusion apparatus in a simple extrusion mode.

In accordance with yet another preferred feature of the present invention, upon operation of the co-extrusion apparatus with the simple extrusion die for a predetermined interval, that die is removed from the co-extrusion apparatus. An additional extrusion die having a single nozzle is then disconnectably coupled to the co-extrusion apparatus so that the nozzle of the additional extrusion die communicates with the previously blocked outlet of the co-extrusion apparatus and so that the outlet previously communicating with the nozzle of the simple extrusion die is blocked by the additional extrusion die. The co-extrusion apparatus is then again operated in a simple extrusion mode to produce a rope-like additional extrudate formed of a single material contained in the hopper communicating with the outlet which in turn communicates with the nozzle of the additional extrusion die.

Pursuant to another preferred feature of the invention, the co-extrusion die and the simple extrusion die, as well as the additional extrusion die, are each provided with a mounting plate having at opposite edges a pair of oppositely inclined beveled surfaces. The co-extrusion apparatus is provided with a securing mechanism engageable with the beveled surfaces for locking the respective die to the co-extrusion apparatus at the outlets thereof. The steps of detachably fastening the co-extrusion die and removably attaching the simple extrusion die (as well as the step of attaching the additional extrusion die) to the co-extrusion apparatus include the manipulation of the securing mechanism to engage the beveled surfaces of the respective die. The step of removing the co-extrusion die (and the step of removing the simple extrusion die) includes the manipulation of the securing mechanism to disengage the same from the beveled surfaces of the co-extrusion die (or the simple extrusion die).

According to another aspect of the invention, there is provided an extrusion die for use in a co-extrusion apparatus having a pair of juxtaposed extruder outlets and coupling means for securing a co-extrusion die to said co-extrusion apparatus at said outlets, said extrusion die comprising a nozzle and being characterised by:
a mounting plate attached to said nozzle and provided with a single eccentrically disposed opening communicating on one side with said nozzle; and
engagement means on said mounting plate for cooperating with the coupling means of the co-extrusion apparatus to secure the extrusion die thereto so that said opening communicates on another side with one outlet of said co-extrusion apparatus and so that said mounting plate blocks the other outlet, the engagement means and the eccentric disposition of said opening permitting said mounting plate to block said one outlet and said opening to communicate with said other outlet, by turning the die through 180^{o}.

The coupling mechanism on the co-extrusion apparatus may comprise a pair of bracket members each having a first beveled contact surface, the engagement means on the mounting plate concomitantly comprising two second beveled contact surfaces at opposite edges of the mounting plate. Each of the second beveled contact surfaces are engageable with a respective first beveled contact surface of the bracket members.

A method in accordance with the present invention for operating a co-extrusion apparatus is particularly advantageous in a geographical area in which continuous operation of the apparatus in a co-extrusion mode for more than one labor shift a day is not warranted by the consumption within that geographical area of a kind of cookie having dissimilar inner and outer portions. Upon production of a predetermined number of cookies adapted to the level of consumption in the geographical area serviced by the co-extrusion apparatus, the apparatus may be easily and quickly modified to produce cookies made of a single material (i.e., a dough). The modification is implemented by substituting a simple extrusion die for a co-extrusion die at the outlets of the apparatus. Because an exchange of the dies may be accomplished with a few minutes, the machine is quickly prepared to produce a simple extrudate consisting of a dough material which formed either the inner or outer portion of the previously produced cookies having an inner portion enveloped by a dissimilar outer portion. While the co-extruder is being operated to produce a simple extrudate, the hopper and its associated feeding mechanism which are not being used can be cleaned and prepared for accommodating a different material.

In a method according to the present invention, a co-extruder may be first operated to produce a first cookie having dissimilar inner and outer portions, then operated to produce a second cookie made of the material comprising the outer portion of the first cookie, and subsequently operated to produce a third cookie having an inner portion of a material different from that of the inner portion of the first cookie and an outer portion of the material forming the outer portion of the first cookie. The amount of down time, i.e., time that the machine is not running, is reduced to a minimum, only a few minutes being required to exchange extrusion dies between each operating cycle.

Similarly, the co-extruder may be initially operated to produce a rope-like co-extrudate, then operated to form a simple extrudate of a first material, subsequently operated to produce another simple extrudate of a second material, and finally operated to extrude the previously produced co-extrudate or another co-extrudate. The same or another operating sequence may then be performed. While the co-extruder is being operated in a simple extrusion mode, the hopper and the feeder mechanism which are not being utilized may be cleaned in preparation for receiving a new dough or other material.

### Brief Description of the Drawing

Fig. 1 is a transverse cross-sectional view of a co-extrusion apparatus having a co-extrusion die attached thereto.

Fig. 2 is a cross-sectional view of the co-extrusion die illustrated in Fig. 1.

Fig. 3 is a cross-sectional view, on an enlarged scale, of a simple extrusion die substitutable for the co-extrusion die of Fig. 2 in the co-extruder assembly of Fig. 1.

Fig. 4 is a top view of the simple extrusion die of Fig. 3.

### Detailed Description of Preferred Embodiments

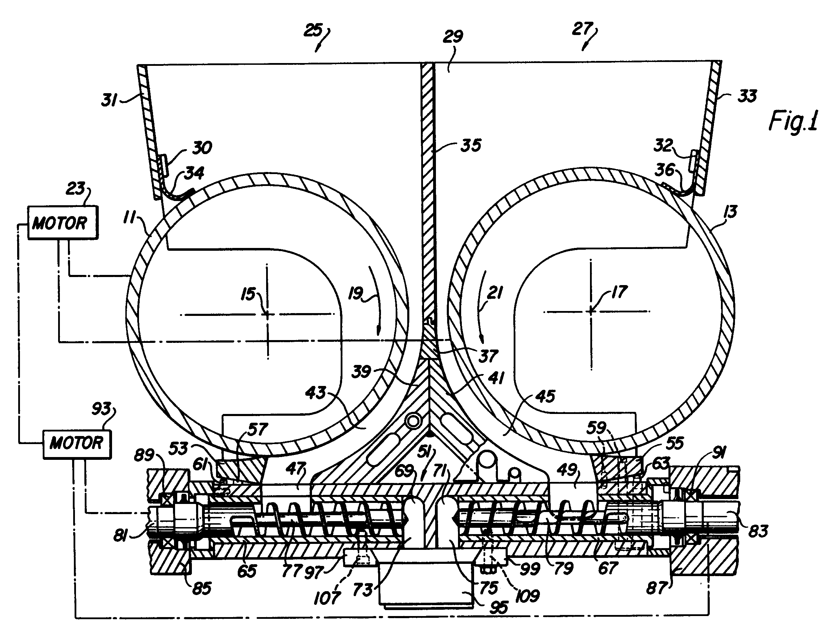

As illustrated in Fig. 1, a co-extrusion apparatus comprises a pair of cylindrical drums 11 and 13 mounted to a frame (not illustrated) for rotation about respective parallel axes 15 and 17 in directions indicated by arrows 19 and 21. A motor 23 is operatively connected to drums 11 and 13 by means of respective rotary power transmission trains whereby the rate of rotation of the drums may be separately varied.

The co-extrusion apparatus further includes a pair of hoppers 25 and 27 located above drums 11 and 13, respectively. The hoppers are formed in part by a pair of end plates 29 (only one shown in the drawing) disposed at opposite ends of counterrotatable drums 11 and 13. The drums are also formed in part by a pair of side plates 31 and 33 and an intermediate dividing plate 35. The side plates 31 and 33 are inclined at a slight angle with respect to the vertical, while the intermediate plate extends vertically midway between drums 11 and 13.

Side plates 31 and 33 are connected at their bottom ends by means of respective bolts or rivets 30 and 32 to a pair of wiping elements 34 and 36 each having an end engaging the outer surface of a respective drum 11 and 13 for closing the space between the respective side plate 31 and 37 and the respective drum 11 and 13.

At its bottom edge, intermediate plate 35 is connected via a coupling member 37 to a pair of curved guide members 39 and 41. Members 37, 39 and 41 all extend parallel to the axes of rotation 15 and 17 of drums 11 and 13. Intermediate plate 35, coupling member 37, and guide members 39 and 41 cooperate with the cylindrical outer surfaces of drums 11 and 13 to define a pair of passageways 43 and 45 extending from hoppers 25 and 27, respectively, to a pair of apertures 47 and 49 formed in the upper surface of an auger housing 51.

At the lower ends of passageways 43 and 45 are disposed a pair of scraper members 53 and 55 each having a scraping edge engaging the outer surface of a respective drum 11 and 13 and an additional edge engaging an upper surface of auger housing 51 proximate to a respective aperture 47 and 49 therein. Scraper members 53 and 55 are attached to auger housing 51 by means of respective bolts 57 and 59, further bolts 61 and 63 being provided for adjusting the angles of inclination of the scraper members with respect to the upper surface of the auger housing and with respect to the outer surface of drums 11 and 13.

Auger housing 51 is provided with a pair of substantially colinear bores each lined with a respective sleeve 65 and 67. The colinear bores in auger housing 51 terminate in respective transversely extending vertical bores 69 and 71 which define at their lower ends a pair of oval output ports or outlets 73 and 75.

Rotatably mounted within each sleeve 65 and 67 is a respective auger or worm 77 and 79. Augers 77 and 79 form extensions of a pair of drive shafts 81 and 83 rotatably mounted within respective support members 85 and 87 by means of respective ball or roller bearings 89 and 91. A motor 93 is operatively coupled to drive shafts 81 and 83 by means of a pair of rotary power transmission trains by which the angular velocity of augers 77 and 79 may be independently varied. Motors 23 and 93 may be operatively coupled to, e.g., a programmer device (not illustrated) for controlling the angular speeds of augers 77 and 79 and of drums 11 and 13 with respect to each other.

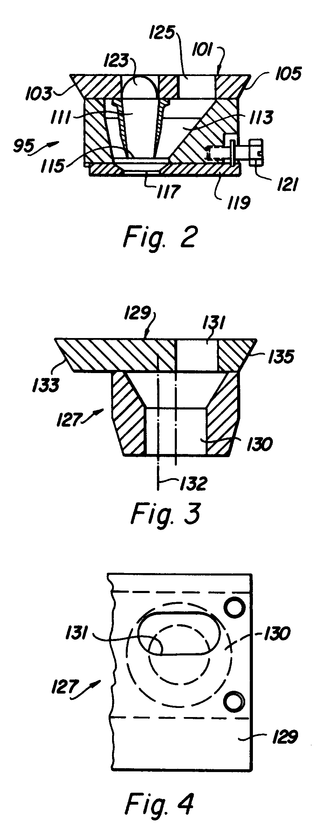

In a co-extrusion mode of operation of the device illustrated in Fig. 1, a co-extrusion die 95 is fastened to the bottom side of auger housing 51 by means of a pair of mounting brackets 97 and 99. As illustrated in Fig. 2, co-extrusion die 95 includes a mounting plate 101 provided at a pair of opposite sides or edges with a pair of oppositely inclined beveled surfaces 103 and 105. Beveled surfaces 103 and 105 are engageable by inclined surfaces on brackets 97 and 99, respectively, as illustrated in Fig. 1. Brackets 97 and 99 are secured to auger housing 51 by respective pluralities of bolts 107 and 109.

As illustrated in Fig. 2 co-extrusion die 95 includes an inner nozzle 111 and a outer nozzle 113, the outer nozzle being formed by the body or housing of die 95. Inner nozzle 111 has an outlet or orifice 115 spaced inwardly from an outlet or orifice 117 of outer nozzle 113. Orifice 117 of outer nozzle 113 is provided in a plate 119 fastened to the bottom of the die at a horizontal position with respect thereto determined by an adjustment bolt 121. A rope-like co-extrudate material produced by the co-extruder of Fig. 1 with the co-extrusion die of Fig. 2 is deposited on a horizontally moving conveyor (not illustrated) below the co-extrusion die and is transported by the conveyor to a cutting station and from thence to an oven. Because the side of the rope-like co-extrudate contacting the conveyor is placed in tension during the depostion of the co-extrudate on the conveyor, while the opposite side of the co-extrudate is compressed, it is advantageous to adjust the horizontal position of orifice 117 with respect to orifice 115 to ensure that the material forming the outer tube of the co-extrudate is in greater abundance on the side thereof contacting the conveyor than on the opposite side.

Mounting plate 101 is provided with a pair of openings 123 and 125 which communicate on one side with outlets 73 and 75, respectively, and on an opposite side with nozzles 111 and 113, respectively.

As illustrated in Fig. 3, a simple extrusion die 127 utilizable in a method of operating a co-extrusion apparatus in accordance with the present invention comprises a mounting plate 129 and a single nozzle 130. The mounting plate is provided with an eccentrically disposed opening 131 which communicates on one side with outlet 75 of auger housing 51 and on an opposite side with nozzle 130 upon a mounting of die 127 to the lower side of auger housing 51. Upon such a fastening of die 127 to auger housing 51, mounting plate 129 covers outlet 73 and thereby blocks material from passing through that outlet.

Extrusion die 127 is formed in such a way that, upon a 180° rotation of the die about a longitudinal axis 132 and upon the attachment of the die to the lower face or the auger housing, nozzle 130 communicates with outlet 73 via opening 131 and mounting plate 129 covers outlet 75 and thereby blocks the passage of material therethrough.

As illustrated in Fig. 4, opening 131 may take an oval shape to conform to the shape of outlets 73 and 75. It is to be noted that a co-extruder of the type illustrated in Fig. 1 is generally provided with a multiplicity of equispaced worm assemblies each including a pair of oppositely facing augers for feeding semi-solid material from respective apertures (such as apertures 47 and 49) to respective outlets (such as outlets 73 and 75). In such an apparatus, there may be provided a plurality of equispaced extrusion dies (e.g., die 95 or die 127) rigid with a common mounting plate securable to the lower face of auger housing 51 by means of a pair of elongate brackets (e.g., 97 and 99) extending parallel to the axes of rotation 15 and 17 of drums 11 and 13. Although drums 11 and 13 are shown to be hollow in Fig. 1, it is advantageous in many cases to use solid cylinders.

In a co-extrusion mode of operation, drums 11 and 13 are operated by motor 23 to counterrotate in the directions of arrows 19 and 21, thereby drawing material from hoppers 25 and 27 through passageways 43 and 45 to apertures 47 and 49, Augers 77 and 79 then force the material through the horizontal bores of auger housing 51 to the transversely extending bores 69 and 71. The material from hopper 25 and the material from hopper 27 then flow through outlets 73 and 75, openings 123 and 125, nozzles 111 and 113, and orifices 115 and 117. A rope-like co-extrudate is produced at orifice 117. The inner core of the co-extrudate is formed from one material, a supply of which is stored in hopper 25, while the outer tube surrounding the inner core is formed from a second material, a supply thereof being stored in hopper 27.

In accordance with the method of the present invention, upon the production of a predetermined length of co-extrudate, the rotation of drums 11 and 13, as well as the turning of augers 77 and 79, is stopped. Bracket 99 is then unbolted from auger housing 51 and die 95 is removed from the co-extrusion apparatus. Then drum 11 and auger 77 may be temporarily operated to empty hopper 25, passageway 43, sleeve 65 and bore 69 of the material forming the inner core of the co-extrudate. Upon the stopping of drum 11 and auger 77, simple extrusion die 127 may be placed against the bottom surface of auger housing 51 so that a beveled surface 133 of mounting plate 129 engages the corresponding inclined surface of bracket member 97. Bracket member 99 is then bolted into position so that the inclined surface thereof contacts an inclined surface 135 on mounting plate 129.

Upon the attachment of the simple extrusion die 127 to the co-extrusion apparatus so that nozzle 130 communicates with outlet 75, drum 12 and auger 79 are operated to feed the material disposed in hopper 27 through passageway 45, aperture 49, sleeve 67, bore 71, outlet 75, and opening 131 to nozzle 130. In this way the co-extrusion apparatus may be used in a simple extrusion mode to produce a rope-like extrudate formed of a single material.

During the operation of the co-extrusion apparatus in a simple extrusion mode, the portion of the apparatus associated with the drum 11 may be at least partially cleaned. For example, auger 77 can be removed from sleeve 75 and water subsequently flushed through hopper 75, passageway 43, aperture 47 and sleeve 65. Alternatively, other parts of the co-extrusion apparatus, such as side plate 31 and drum 11 may be temporarily removed to facilitate cleaning operations.

Upon the cleaning of that portion of the apparatus associated with drum 11 and upon the operation of the apparatus in the simple extrusion mode for a predetermined period of time (producing a predetermined length of extrudate), the rotation of drum 13 and auger 79 is stopped and simple extrusion die 127 is replaced by co-extrusion die 95. The co-extrusion apparatus may then be operated again in the co-extrusion mode, with a different material in hopper 25 than was stored there during the previous co-extrusion operation.

Thus, in accordance with the method of the present invention, a co-extruder may be operated during a first predetermined interval of time to produce a predetermined length of a first co-extrudate. The co-extrudate may comprise an outer tube of a first material such as dough and an inner core of a second material such as fruit filling. During a second interval of operation, the co-extruder is operated to produce an extrudate consisting of the dough material which formed the outer tube of the co-extrudate during the first interval of operation. During a third operating interval, the co-extruder functions to produce a co-extrudate having a doughy outer shell and an inner core formed, for example, of a dough containing particulate matter such as chocolate chips or nut fragments.

It is clear that a co-extruder may be operated in accordance with the present invention so that any two intervals of operation in the co-extrusion mode are separated by one or more intervals of operation in a simple extrusion mode. In addition, if the materials of the inner core and outer tube of the co-extrudates produced during the two intervals of co-extrusion operation are identical, it would not be necessary to empty and clean the hopper and the associated feeding mechanism which are not being used during the simple extrusion mode of operation.

## Claims

1. A method for using a co-extrusion apparatus including a first hopper (25) for containing a supply of a first material and a second hopper (27) for containing a supply of a second material, said co-extrusion apparatus further including first means (11, 77) for feeding said first material from said first hopper (25) to a first outlet (73) and second means (13, 79) for feeding said second material from said second hopper (27) to a second outlet (75) proximate to said first outlet, said method comprising the following steps:
detachably fastening a co-extrusion die (95) providing an inner nozzle (111) and an outer nozzle (113) surrounding said inner nozzle (111), to the co-extrusion apparatus so that said inner nozzle (111) communicates with the first outlet (73) and said outer nozzle (113) communicates with the second outlet (75);
operating said co-extrusion apparatus to produce a rope-like co-extrudate having a core formed of the first material and a tube-like outer layer formed of the second material and surrounding said core;
removing said co-extrusion die (95) from said co-extrusion apparatus;
removably attaching a simple extrusion die (127) with a single nozzle (130), to said co-extrusion apparatus so that said single nozzle (130) communicates with one (75) of said first and said second outlets (73, 75) and so that said simple extrusion die (127) blocks the other (73) of said first and said second outlets (73, 75) to prevent the passage of the respective material therethrough; and
operating said co-extrusion apparatus to produce a rope-like simple extrudate formed of a single material contained in the hopper (27) associated with said one (75) of said first and said second outlets (73, 75).

2. The method defined in claim 1 wherein said second material is a dough.

3. The method defined in claim 2 wherein at least one of said first and said second material contains particulate matter.

4. The method defined in claim 3 wherein said first material is a dough.

5. The method defined in claim 2 wherein said first material is a dough.

6. The method defined in claim 2 wherein said single material consists of said second material.

7. The method defined in any preceding claim, further comprising the step of cleaning the hopper (25) and the means (11, 77) for feeding associated with said other (73) of said first and second outlets, said step of cleaning being performed at least in part during execution of said step of operating said co-extrusion apparatus to produce a rope-like simple extrudate.

8. The method defined in any preceding claim, further comprising the steps of detaching said simple extrusion die (127) from said co-extrusion apparatus, providing an additional extrusion die with a single nozzle, disconnectably coupling said additional extrusion die to said co-extrusion apparatus so that the nozzle of said additional extrusion die communicates with said other (73) of said first and said second outlets and so that said additional extrusion die blocks said one (75) of said first and said second outlets to prevent the passage therethrough of material located in the hopper associated with said one of said first and said second outlet, and operating said co-extrusion apparatus to produce a rope-like additional extrudate formed of a single material contained in the hopper (25) associated with said other (73) of said first and said second outlets.

9. The method defined in any preceding claim wherein said co-extrusion die (95) and said simple extrusion die (127) are each provided with a mounting plate (101, 129) having at opposite edges a pair of oppositely inclined beveled surfaces (103, 105; 133, 135), said co-extrusion apparatus being provided with securing means (97, 107; 99, 109) engageable with said beveled surfaces (103, 105; 133, 135) for locking the respective die (95, 127) to said co-extrusion apparatus at said first and said second outlets (73, 75), said securing means being manipulated, during said steps of detachably fastening and removably attaching, to engage said beveled surfaces (103, 105; 133, 135) of the respective die (95, 127), said securing means being manipulated to disengage said beveled surfaces (103, 105; 133, 135) of said co-extrusion die (95, 127) during said step of removing.

10. An extrusion die (127) for use in a co-extrusion apparatus having a pair of juxtaposed extruder outlets (73, 75) and coupling means (97, 107; 99, 109) for securing a co-extrusion die to said co-extrusion apparatus at said outlets, said extrusion die comprising a nozzle (130) and being characterised by:
a mounting plate (129) attached to said nozzle (130) and provided with a single eccentrically disposed opening (131) communicating on one side with said nozzle (130); and
engagement means (133, 135) on said mounting plate (129) for cooperating with the coupling means (97, 107; 99, 109) of the co-extrusion apparatus to secure the extrusion die (127) thereto so that said opening (131) communicates on another side with one outlet (75) of said co-extrusion apparatus and so that said mounting plate (129) blocks the other outlet (73), the engagement means (133, 135) and the eccentric disposition of said opening (131) permitting said mounting plate (129) to block said one outlet (75) and said opening (131) to communicate with said other outlet (73), by turning the die through 180^{o}.

11. The extrusion die defined in claim 10 wherein said coupling means comprises a pair of bracket members (97, 99) each having a first beveled contact surface and wherein said engagement means comprises two second beveled contact surfaces (133, 135) at opposite edges of said mounting plate (129), each of said second beveled contact surfaces (133, 135) being engageable with a respective first beveled contact surface of said bracket members (97, 99).

## Patentansprüche

1. Verfahren zur Verwendung einer Koextrusionsvorrichtung mit einem ersten Trichter (25), um eine Zufuhr eines ersten Materials zu enthalten, und einem zweiten Trichter (27), um eine Zufuhr eines zweiten Materials zu enthalten, wobei diese Koextrusionsvorrichtung weiterhin eine erste Einrichtung (11, 77) zur Überführung des ersten Materials von dem ersten Trichter (25) zu einem ersten Auslaß (73) und eine zweite Einrichtung (13, 79) zur Überführung des zweiten Materials von dem zweiten Trichter (27) zu einem zweiten Auslaß (75), der in unmittelbarer Nähe des ersten Auslasses ist, enthält, wobei dieses Verfahren die folgenden Stufen umfaßt, in denen man
ein Koextrusionsmundstück (95), welches eine innere Düse (111) und eine äußere Düse (113), welche die innere Düse (111) umgibt, vorsieht, lösbar an der Koextrusionsvorrichtung derart befestigt, daß die innere Düse (111) mit dem ersten Auslaß (73) und die äußere Düse (113) mit dem zweiten Auslaß (25) in Verbindung steht,
die Koextrusionsvorrichtung so betreibt, daß ein strangartiges Koextrudat erzeugt wird, das einen von dem ersten Material gebildeten Kern und eine von dem zweiten Material gebildete und den Kern umgebende rohrförmige Außenschicht hat,
das Koextrusionsmundstück (95) von der Koextrusionsvorrichtung entfernt,
ein einfaches Extrusionsmundstück (127) mit einer einfachen Düse (130) lösbar an der Koextrusionsvorrichtung derart befestigt, daß die einzelne Düse (130) mit einem (75) der ersten und der zweiten Auslässe (73, 75) in Verbindung steht und daß das einfache Extrusionsmundstück (127) den anderen (73) der ersten und zweiten Auslässe (73, 75) blockiert, um den Durchgang des betreffenden Materials durch ihn hindurch zu verhindern, und
die Koextrusionsvorrichtung derart betreibt, daß man ein strangartiges einfaches Extrudat erzeugt, das von einem einzigen Material gebildet wird, welches in dem Trichter (27) enthalten ist, der mit dem einen (75) der ersten und zweiten Auslässe (73, 75) verbunden ist.

2. Verfahren nach Anspruch 1, bei dem das zweite Material ein Teig ist.

3. Verfahren nach Anspruch 2, bei dem wenigstens eines des ersten und zweiten Materials feinteiliges Material enthält.

4. Verfahren nach Anspruch 3, bei dem das erste Material ein Teig ist.

5. Verfahren nach Anspruch 2, bei dem das erste Material ein Teig ist.

6. Verfahren nach Anspruch 2, bei dem das einzige Material aus dem zweiten Material besteht.

7. Verfahren nach einem der vorausgehenden Ansprüche, zusätzlich mit der Stufe, in der man den Trichter (25) und die Einrichtung (11, 77) zur Überführung, die mit dem anderen (73) der ersten und zweiten Auslässe verbunden ist, reinigt, wobei diese Reinigungsstufe wenigstens teilweise während der Durchführung der Stufe des Betriebs der Koextrusionsvorrichtung zur Erzeugung eines strangartigen einfachen Extrudats erfolgt.

8. Verfahren nach einem der vorausgehenden Ansprüche, weiterhin mit den Stufen, in denen man das einfache Extrusionsmundstück (127) von der Koextrusionsvorrichtung löst, ein weiteres Extrusionsmundstück mit einer einzigen Düse vorsieht, dieses weitere Extrusionsmundstück trennbar mit der Extrusionsvorrichtung derart verbindet, daß die Düse des weiteren Extrusionsmundstückes in Verbindung mit dem anderen (73) der ersten und zweiten Auslässe in Verbindung steht und daß das weitere Extrusionsmundstück den einen (75) der ersten und zweiten Auslässe blockiert, um einen Durchgang von Material in dem Trichter, der mit dem einen der ersten und zweiten Auslässe verbunden ist, durch ihn hindurch zu verhindern, und die Koextrusionsvorrichtung derart betreibt, daß man ein zusätzliches strangartiges Extrudat erzeugt, das von einem einzigen Material gebildet wird, welches in dem Trichter (25) enthalten ist, der mit dem anderen (73) der ersten und zweiten Auslässe verbunden ist.

9. Verfahren nach einem der vorausgehenden Ansprüche, bei dem man das Koextrusionsmundstück (35) und das einfache Extrusionsmundstück (127) jeweils mit einer Befestigungsplatte (101, 129) versieht, die an gegenüberliegenden Kanten ein Paar von entgegengesetzt geneigten abgefasten Oberflächen (103, 105; 133, 135) hat, wobei die Koextrusionsvorrichtung mit Befestigungseinrichtungen (97, 107; 99, 109) versehen ist, die in die abgefasten Oberflächen (103, 105; 133, 135) eingreifen, um das betreffende Mundstück (95, 127) an der Koextrusionsvorrichtung an dem ersten und zweiten Auslaß (73, 75) zu verankern, die Befestigungseinrichtung während der Stufen des lösbaren Befestigens und entfernbaren Anfügens so gehandhabt wird, daß sie in die abgefasten Oberflächen (103, 105; 133, 135) des betreffenden Mundstückes (95, 127) eingreift und die Befestigungseinrichtung so gehandhabt wird, daß sie während der Entfernungsstufe außer Eingriff mit den abgefasten Oberflächen (103, 105; 133, 135) des Koextrusionsmundstückes (95, 127) tritt.

10. Extrusionsmundstück (127) für die Verwendung in einer Koextrusionsvorrichtung mit einem Paar nebeneinanderliegender Extruderauslässe (73, 75) und Verbindungseinrichtungen (97, 107; 99, 109) zur Befestigung eines Koextrusionsmundstückes an der Koextrusionsvorrichtung an diesen Auslässen, wobei das Extrusionsmundstück eine Düse (130) umfaßt und gekennzeichnet ist durch:
eine Befestigungsplatte (129), die an der Düse (130) befestigt ist und mit einer einzigen exzentrisch angeordneten Öffnung (131) versehen ist, die auf einer Seite mit der Düse (130) in Verbindung steht, und
Eingriffeinrichtungen (133, 135) auf dieser Befestigungsplatte (129) zum Zusammenwirken mit den Verbindungseinrichtungen (97, 107;99, 109) der Koextrusionsvorrichtung, um das Extrusionsmundstück (127) derart daran zu befestigen, daß die Öffnung (131) auf einer anderen Seite mit einem Auslaß (75) der Koextrusionsvorrichtung in Verbindung steht und die Befestigungsplatte (129) den anderen Auslaß (73) blockiert, und wobei die Eingriffeinrichtungen (133, 135) und die exzentrische Anordnung der Öffnung (131) es erlauben, daß die Befestigungsplatte (129) den einen Auslaß (75) blockiert und daß die Öffnung (131) in Verbindung mit dem anderen Auslaß (73) durch Drehen des Mundstückes um 180° in Verbindung steht.

11. Extrusionsmundstück nach Anspruch 10, bei dem die Verbindungeinrichtung ein Paar von Trägerteilen (97, 99) umfaßt, von denen jedes eine erste abgefaste Kontaktoberfläche hat, und bei dem die Eingriffeinrichtungen zwei zweite abgefaste Kontaktoberflächen (133, 135) an gegenüberliegenden Kanten der Befestigungsplatte (129) umfassen, wobei jede der zweiten abgefasten Kontaktoberflächen (133, 135) in Eingriff mit der betreffenden ersten abgefasten Kontaktoberfläche der Trägerteile (97, 99) bringbar ist.

## Revendications

1. Procédé pour utiliser un dispositif de co-extrusion comprenant une première trémie (25) pour contenir un chargement d'une première matière et une seconde trémie (27) pour contenir un chargement d'une seconde matière, ledit dispositif de co-extrusion comprenant en outre un premier moyen (11, 77) pour délivrer ladite première matière à partir de ladite première trémie (25) au droit d'un premier orifice de sortie (73) et un second moyen (13, 79) pour délivrer ladite seconde matière à partir de ladite seconde trémie (27) au droit d'un second orifice de sortie (75) proche dudit premier orifice de sortie, ledit procédé comprenant les étapes suivantes :
fixation de manière amovible d'une filière de co-extrusion (95) fournissant une buse intérieure (111) et une buse extérieure (113) entourant ladite buse intérieure (111), au dispositif de co-extrusion de sorte que ladite buse intérieure (111) communique avec le premier orifice de sortie (73) et à ce que ladite buse extérieure (113) communique avec le second orifice de sortie (75) ;
mise en oeuvre dudit dispositif de co-extrusion pour produire un co-extrudat en forme de cordon ayant une âme formée de la première matière et une couche extérieure en forme de tube formée de la seconde matière et entourant ladite âme ;
démontage de ladite filière de co-extrusion (95) dudit dispositif de co-extrusion ;
fixation de manière amovible d'une filière d'extrusion simple (127) avec une buse unique (130), audit dispositif de co-extrusion de sorte que ladite buse unique (130) communique avec l'un (75) dudit premier et dudit second orifice de sortie (73, 75) et de manière à ce que ladite filière d'extrusion simple (127) obture l'autre (73) dudit premier et dudit second orifices de sortie (73, 75) pour empêcher la matière correspondante de le traverser ; et,
mise en oeuvre dudit dispositif de co-extrusion pour produire un extrudat simple en forme de cordon formé d'une seule matière contenue dans la trémie (27) associée avec ledit un (75) dudit premier et dudit second orifices de sortie (73, 75).

2. Procédé selon la revendication 1, dans lequel ladite seconde matière est une pâte.

3. Procédé selon la revendication 2, dans lequel ladite au moins une de ladite première et de ladite seconde matières contient une matière sous forme de particules.

4. Procédé selon la revendication 3, dans lequel ladite première matière est une pâte.

5. Procédé selon la revendication 2, dans lequel ladite première matière est une pâte.

6. Procédé selon la revendication 2, dans lequel ladite matière unique est constituée de ladite seconde matière.

7. Procédé selon l'une quelconque des revendications précédentes, comprenant en outre l'étape de nettoyage de la trémie (25) et du moyen (11, 77) d'alimentation associés avec ledit autre (73) desdits premier et second orifices de sortie, ladite étape de nettoyage étant effectuée au moins en partie pendant l'exécution de ladite étape de mise en oeuvre dudit dispositif de co-extrusion pour produire un extrudat simple en forme de cordon.

8. Procédé selon l'une quelconque des revendications précédentes, comprenant en outre les étapes de démontage de ladite filière d'extrusion simple (127) dudit dispositif de co-extrusion, de fourniture d'une matrice d'extrusion supplémentaire avec une buse unique, d'accouplement de manière amovible de ladite filière d'extrusion supplémentaire audit dispositif de co-extrusion de sorte que la buse de ladite filière d'extrusion supplémentaire communique avec ledit autre (73) desdits premier et second orifices de sortie et de manière à ce que ladite filière d'extrusion supplémentaire obture ledit un (75) desdits premier et second orifices de sortie pour empêcher le passage à travers elle de la matière située dans la trémie associée avec ledit un dudit premier et dudit second orifices de sortie, et de mise en oeuvre dudit dispositif de co-extrusion pour produire un extrudat supplémentaire en forme de cordon formé d'une matière unique contenue dans la trémie (25) associée avec ledit autre (73) dudit premier et dudit second orifices de sortie.

9. Procédé selon l'une quelconque des revendications précédentes, dans lequel ladite filière de co-extrusion (95) et ladite filière d'extrusion simple (127) sont chacune pourvue d'une plaque de montage (101, 129) ayant au droit des côtés opposés une paire de surfaces en biseau inclinés en sens contraire (103, 105 ; 133, 135), ledit dispositif de co-extrusion étant pourvu d'un moyen de fixation (97, 107 ; 99, 109) pouvant coopérer avec lesdites surfaces en biseau (103, 105 ; 133, 135) pour verrouiller la filière respective (95, 127) sur ledit dispositif de co-extrusion au droit dudit premier et dudit second orifices de sortie (73, 75), ledit moyen de fixation étant manipulés, pendant lesdites étapes de fixation de manière amovible, pour coopérer avec lesdites surfaces en biseau (103, 105 ; 133, 135) de la filière respective (95, 127), et lesdits moyens de fixation étant manipulés pour libérer lesdites surfaces en biseau (103, 105 ; 133, 135) de ladite filière de co-extrusion (95, 127) pendant ladite étape de démontage.

10. Filière d'extrusion (127) pour utilisation dans un dispositif de co-extrusion comportant une paire d'orifices de sortie d'extrudeuse (73, 75) juxtaposés et un moyen d'accouplement (97, 107 ; 99, 109) pour fixer une filière de co-extrusion audit dispositif de co-extrusion au droit desdits orifices de sortie, ladite filière d'extrusion comprenant une buse (130) et étant caractérisée par :
une plaque de montage (129) fixée à ladite buse (130) et pourvue d'une ouverture unique disposée de manière excentrée (131) communiquant d'un côté avec ladite buse (130) ; et,
un moyen de coopération (133, 135) sur ladite plaque de montage (129) pour coopérer avec le moyen d'accouplement (97, 107 ; 99, 109) du dispositif de co-extrusion pour y fixer la filière d'extrusion (127) de sorte que ladite ouverture (131) communique d'un autre côté avec un orifice de sortie (75) dudit dispositif de co-extrusion et de manière à ce que ladite plaque de montage (129) obture l'autre orifice (73), le moyen de coopération (133, 135) et la disposition excentrée de ladite ouverture (131) permettant à ladite plaque de montage (129) d'obturer ledit un orifice de sortie (75) et à ladite ouverture (131) de communiquer avec ledit autre orifice de sortie (73), en tournant la filière de 180°.

11. Filière d'extrusion selon la revendication 10, dans laquelle ledit moyen d'accouplement comprend une paire d'éléments supports (97, 99) ayant chacune une première surface de contact biseautée et dans laquelle ledit moyen de coopération comprend deux secondes surfaces de contact biseautées (133, 135) au droit des bords opposés de ladite plaque de montage (129), chacune desdites seconde surface de contact biseautée (133, 135) pouvant coopérer avec une première surface de contact biseautée correspondante desdits éléments supports (97, 99).
